# EUROPÄISCHE PATENTSCHRIFT

(11) **EP 2 420 689 B1**
(45) Veröffentlichungstag und Bekanntmachung des Hinweises auf die Patenterteilung: **17.12.2014**
(21) Anmeldenummer: 11006121.5
(22) Anmeldetag: 26.07.2011
(51) Int. Cl.: F16D 48/02, F15B 7/08, F16D 25/08

(54) **Geberzylinder**
Master cylinder
MAÎTRE-CYLINDRE

(30) Priorität: 16.08.2010 DE 102010034458
(43) Veröffentlichungstag der Anmeldung: 22.02.2012
(73) Patentinhaber: Schaeffler Technologies GmbH & Co. KG, 91074 Herzogenaurach (DE)
(72) Erfinder: Wagner, Philippe, 67500 Haguenau (FR)

(56) Entgegenhaltungen:
- DE-A1- 19 523 215
- DE-A1- 19 953 581
- GB-A- 1 456 884
- US-A- 3 374 868

## Beschreibung

Die vorliegende Erfindung betrifft eine Geberzylinder gemäß dem Oberbegriff des Patentanspruchs 1. Insbesondere betrifft die Erfindung einen Geberzylinder eines hydraulischen Systems mit einem Gehäuse, das eine Druckkammer bildet, in der ein Geberkolben axialbeweglich angeordnet ist, mit einem von der Druckkammer abzweigenden hohlen Nachlaufabgang, der einerseits an einen Nachlaufstutzen und andererseits an den Geberkolben grenzt, und mit einer dynamischen Dichtung auf der Druckkammer abgewandten Seite des Nachlaufabganges zwischen dem Geberkolben und dem Gehäuse.

Aus dem Stand der Technik sind Geberzylinder für hydraulische Systeme bekannt. Es wird auf die DE 10 2006 047 299 A1 verwiesen, in der ein Geberzylinder für ein hydraulisches System beschrieben wird, insbesondere für eine Kupplungsausrückvorrichtung im Antriebsstrang eines Kraftfahrzeuges, mit einem in einem Gehäuse axial verschiebbar angeordneten Kolben, der auf einer Primärseite des Geberzylinders eine mit einem Druckmittel befüllbare Druckkammer begrenzt, welche mit einem Nachlaufbehälter zum Ausgleich von Druckmittel mittels einer Nachlaufleitung auf einer Sekundärseite des Geberzylinders verbindbar ist, und mit einer zwischen dem Kolben und dem Gehäuse wirksamen Dichtung, die die Primärseite gegenüber der Sekundärseite abdichtet.

Geberzylinder werden sowohl in hydraulisch wirkenden Kupplungssystemen als auch in hydraulisch wirkenden Bremssystemen eingesetzt. Dabei wird Druck über ein Pedal bspw. mittels einer Kolbenstange auf einen Geberzylinder übertragen, der dann in eine Druckkammer eintaucht und ein Hydraulikmittel, wie z. B. Öl, unter Druck setzt. Das unter Druck gesetzte Hydraulikmittel wird dann über eine Hydraulikleitung an einen Nehmerzylinder weitergeleitet, um dort eine Aktion hervorzurufen, nämlich die Betätigung der Kupplung auszulösen.

Es ist in hydraulischen Systemen notwendig, eine Entlüftung der Druckkammer vorzuhalten. Diese Entlüftung wird normalerweise dadurch erreicht, dass am druckkammerseitigen Ende des Geberkolbens sog. Schnuffelnuten vorhanden sind. Geraten diese Schnuffelnuten im maximal ausgefahrenen Zustand des Geberkolbens in Anlage mit einer Dichtung, die aufgrund des entsprechenden Wirkprinzips eine dynamische Dichtung ist, so kann Luft aus der Druckkammer entweichen und über eine oberhalb des Geberkolbens angeordnete Leitung, nämlich einem Nachlaufabgang in Richtung eines Nachlaufstutzens entweichen. Der Nachlaufstutzen seinerseits ist mit einem Reservoir fluidführend in Verbindung, so dass aus dem Reservoir auch Hydraulikflüssigkeit, z. B. Bremsflüssigkeit und/oder Öl in Richtung des Geberkolbens durch die Schnuffelnuten in die Druckkammer leitbar ist.

Im Stand der Technik werden beiderseits des Nachlaufabganges dynamische Dichtungen verwendet, die auf einer ersten Seite des Nachlaufabganges einerseits mit dem Geberkolben und andererseits mit dem Gehäuse in Anlage befindlich sind, und auf einer zweiten Seite des Nachlaufabganges einerseits mit dem Gehäuse und andererseits mit einem am Gehäuse verschweißten Schweißring in Anlage befindlich sind. Diese beiden Dichtungen sind dynamischer Natur und unterliegen einem erheblichen Verschleiß.

Die bestehenden Lösungen haben den Nachteil, dass mehrere dynamische Dichtungen einzusetzen sind, die Dichtlippen aufweisen und große Toleranzketten hervorrufen. Dies bedingt einen großen minimalen Leerweg des Geberkolbens, was nicht gewünscht ist. Zusätzlich benötigt man nicht nur zwei dynamische Dichtungen, sondern auch noch einen Zwischenring, der die druckkammerseitige dynamische Dichtung, die Primärdichtung, axial fixiert.

Aus der DE 199 53 581 A1 ist ein Geberzylinder bekannt, der auf den Oberbegriff des Patentanspruchs 1 lesbar ist.

Es ist daher die Aufgabe der vorliegenden Erfindung, einen Geberzylinder mit einem minimalen Leerweg des Geberkolbens zu schaffen, eine Entlüftung des Geberzylinders vorzuhalten und dabei weniger dynamische Dichtungen zu verwenden.

Erfindungsgemäß gelöst wird diese Aufgabe durch einen Geberzylinder gemäß Patentanspruch 1.

In den Geberzylinder ist eine gegen den Nachlaufstutzen geschlossene Hülse eingebaut, die bei im Inneren der Hülse vorhandenen Überdruck mit einem Dichtelement in dichtender Anlage mit der Wandung des Nachlaufabganges gedrängt ist und bei fehlendem Überdruck im Inneren der Hülse von der Wandung beabstandet, einen im Nachlaufabgang vorhandenen Entlüftungsschlitz frei gibt. Ein solcher Entlüftungsschlitz kann auch als Entlüftungskanal bezeichnet werden.

Unter Überdruck wird der Mehrdruck verstanden, der vorliegt, sobald der Geberkolben sich von seiner maximal ausgefahrenen Position in das Innere des Druckkolbens bewegt und dort eine Druckänderung hervorruft.

In der vorliegenden Lösung kann auf die Primärdichtung verzichtet werden. Lediglich eine Sekundärdichtung, die dann als dynamische Dichtung ausgestaltet ist, ist dabei verwendet. Sobald Überdruck in der Druckkammer durch ein Einfahren des Geberkolbens in die Druckkammer erzeugt ist, gelangt unter Druck stehende Hydraulikflüssigkeit, z. B. Bremsflüssigkeit, in den Raum zwischen Gehäuse, Geberkolben, dynamischer Dichtung (Sekundärdichtung) und Hülse. Das in das Innere der Hülse eindringende Hydraulikfluid, das unter Druck steht, drängt die Hülse so auseinander, dass das Dichtelement in Anlage mit der Wandung des Nachlaufabganges gerät. Dadurch wird der zwischen der Außenseite der Hülse und der Wandung des Nachlaufabganges vorhandene Lüftungsschlitz geschlossen. Weder Luft noch Hydraulikflüssigkeit kann dann über den Nachlaufabgang in Richtung des Nachlaufstutzens entfliehen.

Um die Freigabe des Lüftungsschlitzes im maximal ausgefahrenen Zustand des Geberkolbens besonders einfach zu realisieren, besteht die Hülse aus bei Druck verwindbarem und/oder kompressiblem Material.

Vorteilhafte Ausführungsformen sind in den Unteransprüchen beansprucht und werden nachfolgend näher erläutert.

So ist es von Vorteil, wenn die Hülse mit einem Ansatzbereich in die Druckkammer ragt, an dem der Geberkolben in seiner maximal ausgefahrenen Position anschlägt. Bei dem Anschlagen des Geberkolbens, also wenn ein aktivierendes Pedal nicht betätigt ist, drückt eine Feder dabei vorteilhafterweise so auf den Geberkolben, dass die von der Feder rührende Kraft auf die Hülse übertragen wird. Dabei erfolgt eine Verkippung der Hülse im Inneren des Nachlaufabganges und/oder eine Kompression der Hülse. In beiden Fällen wird ein Entlüftungsschlitz freigegeben, so dass etwaige in der Druckkammer enthaltene Luft in Richtung des Nachlaufstutzens entweichen kann.

Es ist auch von Vorteil, wenn der Ansatzbereich eine axiale Verlängerung der Hülse ist. Auf diese Weise kann die Hülse nur etwas länger ausfallen und ein Blockieren des Geberkolbens mit einfachen Mitteln hervorrufen.

Wenn der Geberkolben einen umlaufenden Flansch auf seinem druckkammerseitigen Ende aufweist, der in Anlage mit der Hülse bringbar ist, so ist sichergestellt, dass in seiner maximal ausgefahrenen Position Kraft auf die Hülse übertragen wird. Eine sichere Entlüftung im überdruckfreien Zustand ist dann sichergestellt.

Obwohl es möglich ist, dass das Dichtelement in die Hülse integriert ist, ist es von Vorteil, wenn das Dichtelement ein von der Hülse separates Bauteil ist, das in einer umlaufenden Nut auf der Außenseite der Hülse angeordnet ist. Auf diese Weise lässt sich das Dichtelement durch einen einfachen O-Ring realisieren. Dies führt zu einer Minderung der Kosten.

Die Entlüftung funktioniert dann besonders gut, wenn zwischen der Außenseite der Hülse und der Wandung des Nachlaufabganges auch in einem nicht maximal ausgefahrenen Zustand des Geberkolbens der nur vom Dichtelement unterbrochener Entlüftungsschlitz vorhanden ist.

Auch ist es von Vorteil, wenn die Hülse auf ihrer druckkammerfernen Seite einen umlaufenden Vorsprung aufweist, der in Anlage mit einer Verjüngung des Nachlaufabgangs, zur Begrenzung einer Bewegbarkeit der Hülse in Richtung des Geberkolbens, bringbar ist. Eine solche Ausgestaltung lässt sich mit einfachen Mitteln, insbesondere durch Nutzung von Kunststoffspritzwerkzeugen erreichen.

Es ist auch von Vorteil, wenn die Hülse so bemessen ist, dass sie beim Anschlagen des Geberkolbens an den Ansatzbereich in eine Verkippung relativ zu einer Symmetrieachse des Nachlaufabgangs bringbar ist. Auf diese Weise vergrößert sich der Entlüftungsschlitz auf einer Seite der Hülse zunehmend, was zu einer besseren Entlüftung führt.

Weiter wird die Aufgabe mit einem in ein Kupplungs- und/oder Bremssystem eingesetzten erfindungsgemäßen Geberzylinder gelöst.

Die Erfindung wird nachfolgend anhand eines Ausführungsbeispiels und zugehöriger Zeichnungen näher erläutert.

So zeigen:
- Fig. 1: einen Querschnittsausschnitt aus einem erfindungsgemäßen Geberzylinder, wobei der Geberkolben noch nicht in seiner maximal ausgefahrenen Position angelangt ist und
- Fig. 2: dasselbe Ausführungsbeispiel in einer vergleichbaren Ansicht, wobei der Geberkolben in seiner maximal ausgefahrenen Position angekommen ist.

Die Figuren sind lediglich schematischer Natur und dienen nur dem Verständnis der Erfindung. Die gleichen Elemente sind mit denselben Bezugszeichen versehen.

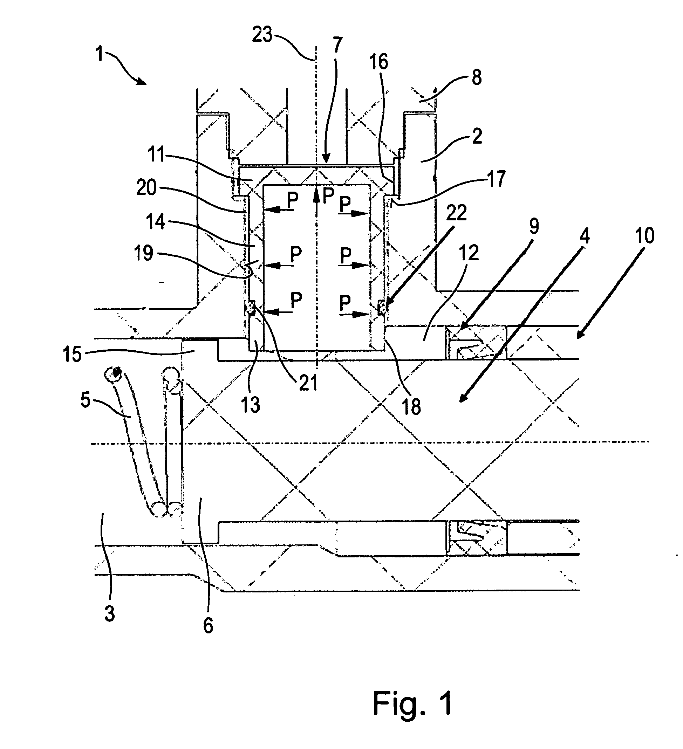

In Fig. 1 ist ein erstes Ausführungsbeispiel eines Geberzylinders 1 dargestellt. Der Geberzylinder 1 ist Teil eines hydraulischen Systems, insbesondere eines Kupplungssystems. Er kann auch Teil eines Bremssystems sein.

Der Geberzylinder 1 weist ein Gehäuse 2 auf. Im Inneren des Gehäuses 2 ist eine Druckkammer 3 vorhanden. Im Inneren der Druckkammer 3 ist ein axial beweglich angeordneter Geberkolben 4 angeordnet.

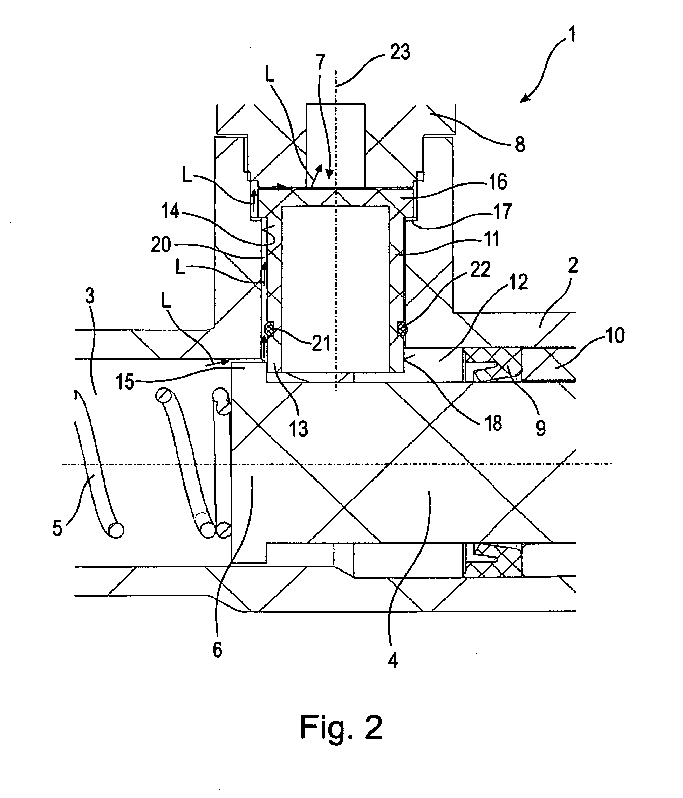

In der Druckkammer 3 ist eine Feder 5 vorhanden, die in Anlage mit einem druckkammerseitigen Ende 6 des Geberkolbens 4 befindlich ist. Die Feder 5 ist auch direkt oder indirekt in Anlage mit dem Gehäuse 2. Die Feder 5 drängt den zu diesem Zeitpunkt nicht aktivierten Geberkolben 4 in eine maximal ausgefahrene Position, die in Fig. 2 dargestellt ist.

Zurückkommend auf Fig. 1 ist ein Nachlaufabgang 7 festzustellen. Der Nachlaufabgang 7 zweigt orthogonal von der Druckkammer 3 oberhalb des Geberkolbens 4 in Richtung eines Nachlaufstutzens 8 ab. Auf der Druckkammer abgewandten Seite des Nachlaufabganges 7 ist eine dynamische Dichtung 9 angeordnet. Diese dynamische Dichtung 9 übernimmt im Wesentlichen die Aufgabe einer bisher verwendeten Sekundärdichtung.

Es fällt auf, dass auf der Druckkammerseite des Nachlaufabganges 7 keine dynamische Dichtung, insbesondere keine Primärdichtung zwischen dem Geberkolben 4 und dem Gehäuse 2 vorhanden ist.

Auf der druckkammerfernen Seite der Dichtung 9 ist eine als Schweißring 10 bezeichnete Hülse vorhanden. Dieser Schweißring 10 ist in Anlage mit der Dichtung 9 befindlich und begrenzt eine potenzielle Bewegung der Dichtung 9 nach außen, von der Druckkammer 3 weg. Der Schweißring 10 ist mit dem Gehäuse 2 verschweißt.

Eine Hülse 11 ragt in das Innere der Druckkammer 3, wobei sich aufgrund des Fehlens einer Primärdichtung die Druckkammer 3 bis in einen Bereich 12 erstreckt, der zwischen dem Geberkolben 4, dem Gehäuse 2, der Dichtung 9 und der Hülse 11 vorhanden ist.

Die Hülse 11 weist dabei ferner einen Ansatzbereich 13 auf, der in diesen Bereich 12 ragt. Der Ansatzbereich 13 ist Teil der Hülse 11 und eine Verlängerung der Wandung 14.

Der Ansatzbereich 13 ragt soweit in den Bereich 12 hinein, dass er in Anlage mit einem Flansch 15 am druckkammerseitigen Ende 6 des Geberkolbens 4 gelangen kann. Das 1-nanschlaggeraten liegt dann vor, wie in Fig. 2 dargestellt, wenn der Geberkolben 4 in seiner maximal ausgefahrenen Position befindlich ist.

Die Hülse 11 ist auf ihrer dem Nachlaufstutzen 8 zugewandten Seite geschlossen ausgebildet und weist dort einen umlaufenden Vorsprung 16 auf, der in Anlage mit einer Verjüngung 17 gerät.

Der Nachlaufstutzen 8 ist in das Gehäuse 2 eingeschweißt, eingeschraubt oder eingepresst und legt die axiale Position der Hülse 11 dadurch fest.

Zwischen einer Außenseite 18 und einer Wandung 19 des Nachlaufabganges 7 ist ein Entlüftungsschlitz 20 vorhanden. Der Entlüftungsschlitz 20 ist in Fig. 1, also im noch nicht maximal ausgefahrenen Zustand des Geberkolbens 4 kleiner, als im maximal ausgefahrenen Zustand, wie im Vergleich mit Fig. 2 erkennbar ist. Auf der Außenseite 18 der Hülse 11 ist eine umlaufende Nut 21 vorgehalten, in der ein Dichtelement 22 positioniert ist. Das Dichtelement 22 ist ein aus elastischem Material gefertigtes Element, wie etwa ein O-Ring.

Bis auf die Feder 5 sind die einzelnen bisher erläuterten Bauteile aus Kunststoff gefertigt. Bezüglich der Hülse 11 ist anzumerken, dass sie aus einem solchen Material gefertigt ist, das sich ausdehnt, wenn im Inneren der Hülse 11 ein entsprechender Druck vorliegt.

In Fig. 2 ist der Zustand dargestellt, der vorliegt, wenn der Geberkolben 4 in seiner maximal ausgefahrenen Position angelangt ist. Dann gerät der Flansch 15 in Anlage mit dem Ansatzbereich 13 der Hülse 11 und führt zu einer Verwindung und/oder Verkippung der Hülse 11, relativ zu einer Symmetrieachse 23 des Nachlaufabganges 7, wodurch der Entlüftungsschlitz 20 größer wird. Auch hebt sich das Dichtelement 22 von der Wandung 19 ab und ermöglicht einen Durchgang von der Druckkammer 3 zu der durch den Nachlaufstutzen 8 gebildeten Leitung.

In Fig. 1 ist der Überdruck durch die Pfeile P dargestellt.

In Fig. 2 sind Pfeile L verwendet, die den Weg der Luftblasen während der Entgleitungsrichtung aufzeigen; also bei der Entlüftung der Druckkammer.

### Bezugszeichenliste

- 1: Geberzylinder
- 2: Gehäuse
- 3: Druckkammer
- 4: Geberkolben
- 5: Feder
- 6: Druckkammerseitiges Ende
- 7: Nachlaufabgang
- 8: Nachlaufstutzen
- 9: Dichtung
- 10: Schweißring
- 11: Hülse
- 12: Bereich
- 13: Ansatzbereich
- 14: Wandung der Hülse
- 15: Flansch
- 16: Vorsprung
- 17: Verjüngung
- 18: Außenseite
- 19: Wandung des Nachlaufabganges
- 20: Entlüftungsschlitz
- 21: Nut
- 22: Dichtelement
- 23: Symmetrieachse

## Patentansprüche

1. Geberzylinder (1) eines hydraulischen Systems mit einem Gehäuse (2), das eine Druckkammer (3) bildet, in der ein Geberkolben (4) axial beweglich angeordnet ist, mit einem von der Druckkammer (3) abzweigenden hohlen Nachlaufabgang (7), der einerseits an einem Nachlaufstutzen (8) und andererseits an den Geberkolben (4) grenzt, und mit einer dynamischen Dichtung (9) auf der Druckkammer abgewandten Seite des Nachlaufabgangs (7) zwischen dem Geberkolben (4) und dem Gehäuse (2), wobei eine gegen den Nachlaufstutzen (8) geschlossene Hülse (11) eingebaut ist, die bei im Inneren der Hülse (11) vorhandenem Überdruck mit einem Dichtelement (22) in dichtender Anlage mit der Wandung (19) des Nachlaufabgangs (7) gedrängt ist und bei fehlendem Überdruck im Inneren der Hülse (11) von der Wandung (19) beabstandet, einen im Nachlaufabgang (7) vorhandenen Entlüftungsschlitz (20) freigibt, **dadurch gekennzeichnet, dass** die Hülse (11) aus bei Druck verwindbarem und/oder kompressiblem Material besteht.

2. Geberzylinder (1) nach Anspruch 1, **dadurch gekennzeichnet, dass** die Hülse (11) mit einem Ansatzbereich (13) in die Druckkammer (3) ragt, an dem der Geberkolben (4) in seiner maximal ausgefahrenen Position anschlägt.

3. Geberzylinder (1) nach Anspruch 2, **dadurch gekennzeichnet, dass** der Ansatzbereich (13) eine axiale Verlängerung der Hülse (11) ist.

4. Geberzylinder (1) nach Anspruch 2, **dadurch gekennzeichnet, dass** der Geberkolben (4) einen umlaufenden Flansch (15) auf seinem druckkammerseitigen Ende (6) aufweist, der in Anlage mit der Hülse (11) bringbar ist.

5. Geberzylinder (1) nach einem der Ansprüche 1 bis 4, **dadurch gekennzeichnet, dass** das Dichtelement (22) ein von der Hülse (11) separates Bauteil ist, das in einer umlaufenden Nut (21) auf der Außenseite (18) der Hülse (11) angeordnet ist.

6. Geberzylinder(1) nach Anspruch 5, **dadurch gekennzeichnet, dass** zwischen der Außenseite (18), der Hülse (11) und der Wandung (19) des Nachlaufabganges (7) auch in einem nicht maximal ausgefahrenen Zustand des Geberkolbens (4) der nur vom Dichtelement (22) unterbrochener Entlüftungsschlitz (20) vorhanden ist.

7. Geberzylinder (1) nach einem der Ansprüche 1 bis 6, **dadurch gekennzeichnet, dass** die Hülse (11) auf ihrer druckkammerfernen Seite einen umlaufenden Vorsprung (16) aufweist, der in Anlage mit einer Verjüngung (17) des Nachlaufabganges (7), zur Begrenzung einer Bewegbarkeit der Hülse (11) in Richtung des Geberkolbens (4), bringbar ist.

8. Geberzylinder (1) nach einem der Ansprüche 1 bis 7, **dadurch gekennzeichnet, dass** die Hülse (11) so bemessen ist, dass sie beim Anschlagen des Geberkolbens (4) an den Ansatzbereich (13) in eine Verkippung relativ zu einer Symmetrieachse (23) des Nachlaufabganges (7) bringbar ist.

9. Kupplungssystem und/oder Bremssystem mit einem Geberzylinder (1) nach einem der Ansprüche 1 bis 8.

## Claims

1. Master cylinder (1) of a hydraulic system having a housing (2) which forms a pressure chamber (3), in which a master piston (4) is arranged axially movably, having a hollow return outlet (7) which branches off from the pressure chamber (3) and adjoins firstly a return stub (8) and secondly the master piston (4), and having a dynamic seal (9) on that side of the return outlet (7) which faces away from the pressure chamber between the master piston (4) and the housing (2), a sleeve (11) which is closed against the return stub (8) being installed, which sleeve (11), in the case of a positive pressure which prevails in the interior of the sleeve (11), is displaced with a sealing element (22) into sealing contact with the wall (19) of the return outlet (7) and, in the case of an absence of a positive pressure in the interior of the sleeve (11), in a manner which is spaced apart from the wall (19), opens a ventilating slot (20) which is present in the return outlet (7), **characterized in that** the sleeve (11) is composed of material which can be deformed and/or compressed in the case of pressure.

2. Master cylinder (1) according to Claim 1, **characterized in that** the sleeve (11) protrudes with a projection region (13) into the pressure chamber (3), with which projection region (13) the master piston (4) comes into contact in its maximum extended position.

3. Master cylinder (1) according to Claim 2, **characterized in that** the projection region (13) is an axial extension of the sleeve (11).

4. Master cylinder (1) according to Claim 2, **characterized in that** the master piston (4) has a circumferential flange (15) on its pressure chamber-side end (6), which circumferential flange (15) can be brought into contact with the sleeve (11).

5. Master cylinder (1) according to one of Claims 1 to 4, **characterized in that** the sealing element (22) is a separate component from the sleeve (11), which component is arranged in a circumferential groove (21) on the outer side (18) of the sleeve (11).

6. Master cylinder (1) according to Claim 5, **characterized in that** the ventilating slot (20) which is interrupted only by the sealing element (22) is present between the outer side (18), the sleeve (11) and the wall (19) of the return outlet (7) even in a state of the master piston (4), in which it is not extended to a maximum.

7. Master cylinder (1) according to one of Claims 1 to 6, **characterized in that** the sleeve (11) has a circumferential projection (16) on its side which is remote from the pressure chamber, which projection (16) can be brought into contact with a constriction (17) of the return outlet (7), in order to limit movability of the sleeve (11) in the direction of the master piston (4).

8. Master cylinder (1) according to one of Claims 1 to 7, **characterized in that** the sleeve (11) is dimensioned in such a way that, when the master piston (4) is in contact with the projection region (13), it can be moved into a tilted position relative to an axis of symmetry (23) of the return outlet (7).

9. Clutch system and/or braking system having a master cylinder (1) according to one of Claims 1 to 8.

## Revendications

1. Maître-cylindre (1) d'un système hydraulique comprenant un boîtier (2) qui forme une chambre de pression (3) dans laquelle est disposé un maître-piston (4) de manière mobile axialement, comprenant une sortie de réalimentation creuse (7) bifurquant de la chambre de pression (3), laquelle sortie est, d'un côté, adjacente à une tubulure de réalimentation (8) et, de l'autre côté, adjacente au maître-piston (4), et comprenant un joint d'étanchéité dynamique (9) sur le côté de la sortie de réalimentation (7) opposé à la chambre de pression entre le maître-piston (4) et le boîtier (2), une douille (11) fermée en direction de la tubulure de réalimentation (8) étant installée, laquelle est poussée, par un élément d'étanchéité (22), en contact étanche avec la paroi (19) de la sortie de réalimentation (7) lorsqu'une surpression est présente à l'intérieur de la douille (11) et, en l'absence de surpression à l'intérieur de la douille (11), libère une fente d'aération (20) présente dans la sortie de réalimentation (7), de manière espacée de la paroi (19), **caractérisé en ce que** la douille (11) est constituée d'un matériau pouvant être tordu et/ou compressible en cas de pression.

2. Maître-cylindre (1) selon la revendication 1, **caractérisé en ce que** la douille (11) fait saillie par une région de rallonge (13) dans la chambre de pression (3), contre laquelle région de rallonge bute le maître-piston (4) dans sa position sortie au maximum.

3. Maître-cylindre (1) selon la revendication 2, **caractérisé en ce que** la région de rallonge (13) est un prolongement axial de la douille (11).

4. Maître-cylindre (1) selon la revendication 2, **caractérisé en ce que** le maître-piston (4) comprend une collerette périphérique (15) sur son extrémité (6) située du côté de la chambre de pression, laquelle collerette peut être amenée en contact avec la douille (11).

5. Maître-cylindre (1) selon l'une quelconque des revendications 1 à 4, **caractérisé en ce que** l'élément d'étanchéité (22) est un composant séparé de la douille (11), lequel est disposé dans une rainure périphérique (21) sur le côté extérieur (18) de la douille (11).

6. Maître-cylindre (1) selon la revendication 5, **caractérisé en ce que** la fente d'aération (20) interrompue seulement par l'élément d'étanchéité (22) est présente entre le côté extérieur (18), la douille (11) et la paroi (19) de la sortie de réalimentation (7), également dans un état non sorti au maximum du maître-piston (4).

7. Maître-cylindre (1) selon l'une quelconque des revendications 1 à 6, **caractérisé en ce que** la douille (11) présente, sur son côté éloigné de la chambre de pression, une saillie périphérique (16) qui peut être amenée en contact avec un rétrécissement (17) de la sortie de réalimentation (7), pour limiter une mobilité de la douille (11) en direction du maître-piston (4).

8. Maître-cylindre (1) selon l'une quelconque des revendications 1 à 7, **caractérisé en ce que** la douille (11) est dimensionnée de telle sorte que, lorsque le maître-piston (4) vient en butée contre la région de rallonge (13), elle puisse être amenée en basculement par rapport à un axe de symétrie (23) de la sortie de réalimentation (7).

9. Système d'embrayage et/ou système de frein comprenant un maître-cylindre (1) selon l'une quelconque des revendications 1 à 8.
